# EUROPÄISCHE PATENTSCHRIFT

(11) **EP 1 315 631 B1**
(45) Veröffentlichungstag und Bekanntmachung des Hinweises auf die Patenterteilung: **28.04.2004**
(21) Anmeldenummer: 01953813.1
(22) Anmeldetag: 28.06.2001
(51) Int. Cl.: B60K 41/00, F02N 11/04, B60K 6/10

(54) **VERFAHREN ZUM STARTEN EINES HYBRIDANTRIEBS**
METHOD FOR STARTING A HYBRID DRIVE
PROCEDE POUR METTRE UN ENTRAINEMENT HYBRIDE EN MARCHE

(30) Priorität: 29.08.2000 DE 10042370
(43) Veröffentlichungstag der Anmeldung: 04.06.2003
(73) Patentinhaber: ROBERT BOSCH GMBH, 70442 Stuttgart (DE)
(72) Erfinder: TUMBACK, Stefan, 70469 Stuttgart (DE); HOETZER, Dieter, 71404 Korb (DE)
(86) Internationale Anmeldenummer: PCT/DE2001/002385
(87) Internationale Veröffentlichungsnummer: WO 2002/018167

(56) Entgegenhaltungen:
- EP-A- 0 989 300
- WO-A-89/04081
- DE-A- 19 903 936
- US-A- 4 533 011

## Beschreibung

Die Erfindung bezieht sich auf ein Verfahren zum Starten eines Hybridantriebs, der eine Batterie, einen Verbrennungsmotor und mindestens zwei Elektromaschinen aufweist, von denen mindestens eine zum Starten des Verbrennungsmotors ausgenutzt wird.

In heutigen Kraftfahrzeugen wird der Verbrennungsmotor über einen konventionellen Starter gestartet. Dieser und dessen Ankopplung an die Kurbelwelle sind so realisiert, dass das zum Start notwendige Startmoment auch bei extrem niedrigen Temperaturen (unter -10° C) zu jeder Zeit aufgebracht werden kann. Der hierzu notwendige Strom wird in der Regel von einer 12-Volt-Blei-Säure-Batterie geliefert.

Kraftfahrzeuge mit hybridem Antrieb, wie z.B. in der PCT/DE99/03026 und der DE 197 39 906 A1 angegeben, haben neben dem Verbrennungsmotor eine oder mehrere Elektromaschinen, die sowohl motorisch als auch generatorisch betrieben werden können.

Bei derartigen hybriden Antrieben wird sinnvollerweise meist auf einen konventionellen Starter verzichtet. Die Funktion des Starters übernehmen die vorhandenen Elektromaschinen. Da die Ankopplung der Elektromaschinen an den Verbrennungsmotor nicht auf den Startfall optimiert ist, benötigen die Elektromaschinen hohe Ströme von der Batterie. Obwohl die Batterie eines Hybridfahrzeuges für wesentlich höhere Leistungen als bei einem konventionellen Fahrzeug ausgelegt ist, kommt es insbesondere bei kalten Temperaturen oft vor, dass der benötigte Strom von der Batterie nicht bereit gestellt werden kann.

Ein verfahren mit den Merkmalen des Oberbegriffes des Anspruchs 1 ist aus der WO 89/04081 bekannt.

Der Erfindung liegt die Aufgabe zugrunde, ein Verfahren zum Starten eines Hybridantriebs der eingangs angegebenen Art bereit zu stellen, mit dem auch bei niedrigen Temperaturen ein sicherer Start des Verbrennungsmotors gewährleistet wird.

Diese Aufgabe wird mit den Merkmalen des Anspruches 1 gelöst. Hiernach ist vorgesehen, dass mit Beginn einer Startphase mindestens eine der Elektromaschinen in einem von dem Verbrennungsmotor entkoppelten Zustand unter Zuführung elektrischer Energie aus der Batterie auf eine vorgegebene oder vorgebbare Drehzahl gebracht wird und anschließend in den Generatorbetrieb gesteuert wird und dass die im Generatorbetrieb erhaltene elektrische Energie mindestens einer weiteren der Elektromaschinen zugeführt wird, mit der dann der Verbrennungsmotor gestartet wird.

In dem während der Startphase von dem Verbrennungsmotor abgekoppelten Zustand kann die betreffende Elektromaschine mit der auch bei tiefen Temperaturen zur Verfügung stehenden Energie der Batterie relativ schnell (z.B. innerhalb weniger Sekunden) auf eine sehr hohe Drehzahl gebracht werden. In dem anschließenden Generatorbetrieb steht dann die von dieser bzw, diesen Elektromaschinen erzeugte elektrische Energie vorteilhafterweise zusätzlich zu der elektrischen Energie der Batterie zum Starten des Verbrennungsmotors zur Verfügung.

Eine vorteilhafte Maßnahme besteht dabei darin, dass bei der Startphase des Verbrennungsmotors die von der mindestens einen Elektromaschine generierte Spannung konstant geregelt wird. Dabei kann ein Spannungseinbruch an der Batterie durch den Generatorbetrieb der betreffenden Elektromaschine(n) geregelt werden, so dass die den Verbrennungsmotor antreibende(n), im Motorbetrieb laufende(n) weitere(n) Elektromaschine(n) ihr maximales Moment liefern kann (können).

Zum Starten des Verbrennungsmotors mit möglichst hohem Moment ist es vorteilhaft, dass die mindestens eine weitere Elektromaschine zusätzlich mit elektrischer Energie aus der Batterie gespeist wird.

Der Startvorgang des Verbrennungsmotors wird weiterhin günstig dadurch unterstützt, dass zum Starten des Verbrennungsmotors ein verzögerndes Drehmoment der mindestens einen Elektromaschine während des Generatorbetriebes mit ausgenutzt wird.

Ist vorgesehen, dass die Drehzahl der mindestens einen Elektromaschine in Abhängigkeit eines erfassten Batteriezustandes vorgegeben wird, so kann die Startphase in Abhängigkeit eines jeweiligen Batteriezustandes verkürzt werden, indem z.B. nicht die höchstmögliche Drehzahl der für den Generatorbetrieb vorgesehenen Elektromaschine(n) angefahren wird.

Mit den angegebenen Maßnahmen wird' die Energie aus der Batterie zunächst in mindestens einer Elektromaschine in Form von kinetischer Energie zwischengespeichert, bevor ein Start des Verbrennungsmotors erfolgt. Die gespeicherte kinetische Energie wird beim Start in kurzer Zeit zur Stromerzeugung genutzt, indem die mindestens eine betreffende Elektromaschine in den generatorischen Betrieb übergeht. Durch die Umwandlung kinetischer Energie in elektrische Energie in mindestens einer Elektromaschine wird beim Start in kurzer Zeit auch bei sehr niedrigen Temperaturen eine genügend hohe Bordnetzleistung zur Verfügung gestellt. Als zusätzlicher Vorteil ergibt sich eine Erwärmung der Batterie beim Hochlauf der mindestens einen im Generatorbetrieb zu betreibenden Elektromaschine, wodurch bereits beim Starten des Verbrennungsmotors mit der mindestens einen weiteren Elektromaschine mehr Leistung aus der Batterie gezogen werden kann.

Die Erfindung wird nachfolgend anhand eines Ausführungsbeispiels unter Bezugnahme auf die Zeichnungen näher erläutert. Es zeigen:
- Fig. 1: eine schematische Darstellung zum Prinzip eines Kaltstarts eines Hybridantriebs,
- Fig. 2: ein Ablaufdiagramm beim Starten des Hybridantriebs,
- Fig. 3: einen Verlauf der Drehzahlen der Elektromaschinen und des Verbrennungsmotors und
- Fig. 4: eine schematische Darstellung eines an sich bekannten Hybridantriebs, bei dem das anmeldungsgemäße Startverfahren durchführbar ist.

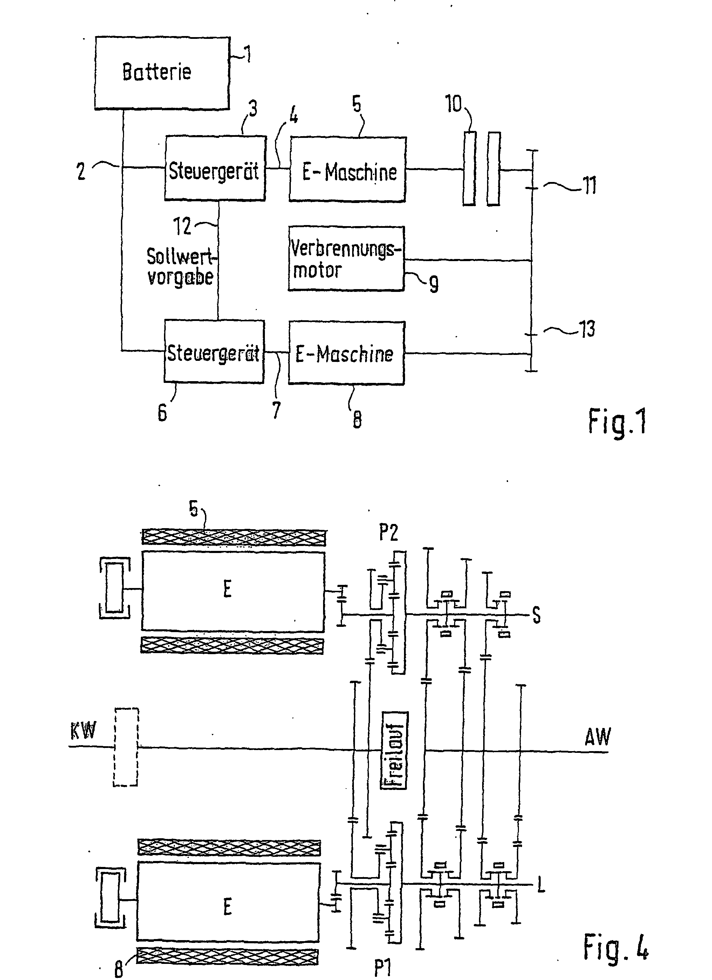

Fig. 1 veranschaulicht das Prinzip eines Kaltstarts am Beispiel eines Hybridantriebs mit einem Verbrennungsmotor 9 und zwei Elektromaschinen 5, 8. Eine Batterie 1 ist über ein Kabel 2 mit Steuergeräten 3, 6 der Elektromaschine 5 bzw. der weiteren Elektromaschine 8 verbunden. Die beispielsweise als Pulswechselrichter ausgeführten Steuergeräte 3, 6 steuern über entsprechende Leitungen 4, 7 die Elektromaschinen 5, 8 an. Dabei können über ein (nicht dargestelltes) externes Steuergerät auch unter Berücksichtigung eines Überwachungsgeräts für den Batteriestrom Sollwerte, beispielsweise Drehzahlen oder Momente, über entsprechende Zuleitungen 12 vorgegeben werden. Die eine Elektromaschine 5 kann mit Hilfe einer Abkoppelstufe 10, z.B. einer Kupplung, von dem Verbrennungsmotor 9 kinematisch abgekoppelt werden, um sie zunächst im Motorbetrieb auf eine vorgegebene oder vorgebbare Drehzahl zu bringe n und anschließend im Generatorbetrieb zu betreiben und Ansteuerstrom für die weitere Elektromaschine 8 zur Verfügung zu stellen, die über ein Getriebe 13 mit dem Verbrennungsmotor 9 verbunden ist. Außer dem Generatorstrom der Elektromaschine 5 wird der weiteren Elektromaschine 8 für den Start vorteilhafterweise eine möglichst hohe Energie der Batterie zugeführt, um ein möglichst hohes Moment mit der weiteren Elektromaschine 8 für den Start des Verbrennungsmotors 9 zu erreichen.

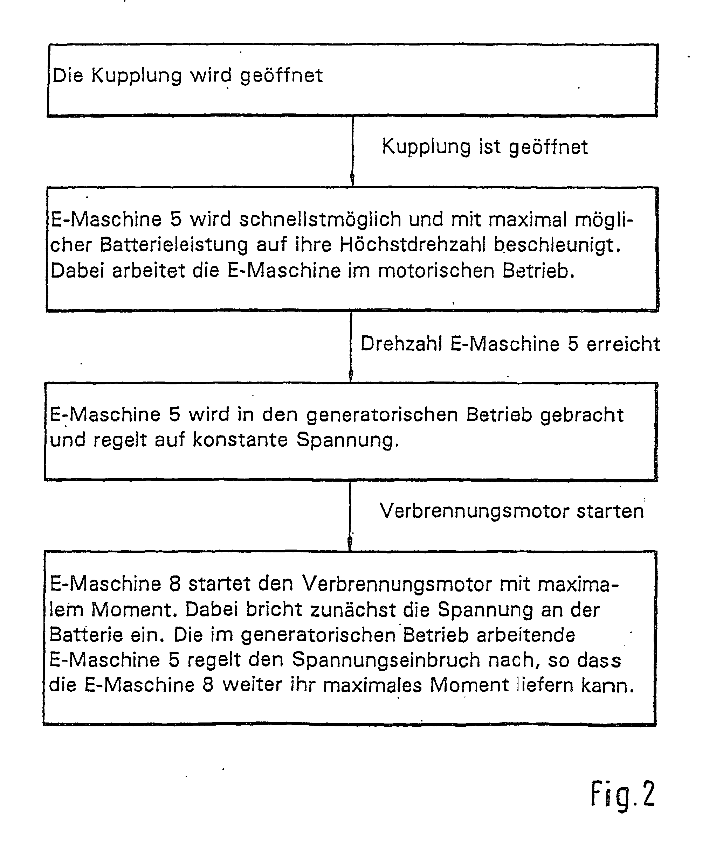

Gemäß dem in Fig. 2 dargestellten Ablaufdiagramm beim Starten des Verbrennungsmotors wird zunächst die Kupplung 4 geöffnet und die Elektromaschine 5 schnellstmöglich und mit maximaler Batterieleistung beispielsweise auf ihre Höchstdrehzahl beschleunigt. Dabei arbeitet die Elektromaschine 5 im motorischen Betrieb. Sobald die Elektromaschine die vorgegebene Drehzahl erreicht hat, wird sie in den Generatorbetrieb gebracht und auf konstante Spannung geregelt. Anschließend wird die weitere Elektromaschine 8 angesteuert, um den Verbrennungsmotor mit möglichst hohem Moment zu starten. Ein dabei auftretender Spannungseinbruch an der Batterie wird mittels der im Generatorbetrieb arbeitenden Elektromaschine 5 nachgeregelt, so dass die weitere Elektromaschine 8 weiterhin ihr maximales Moment liefern kann. Generatorbetrieb der Elektromaschine 5 wird die zuvor gespeicherte kinetische Energie in elektrische Energie für das Bordnetz umgewandelt. Zum Speichern der kinetischen Energie können neben dem Rotor auch angeschlossene Getriebestufen und eine Vorgelegewelle ausgenutzt werden.

Bei einem Hybridantrieb mit einem sogenannten Dual-E-Getriebe wie es an sich aus dem eingangs genannten Stand der Technik bekannt und in Fig. 4 dargestellt ist, läuft der Startvorgang z.B. folgendermaßen ab:
- Auf einer Vorgelegewelle S wird kein Gang eingelegt. Die Vorgelegewelle S und damit auch die Elektromaschine 5 können frei drehen.
- Auf einer weiteren Vorgelegewelle L wird ein beliebiger Gang eingelegt und die Parksperre verriegelt oder die Radbremse betätigt. Die Vorgelegewelle L wird damit blockiert.
- Die Elektromaschine 5 wird nun mit dem zur Verfügung stehenden Strom auf eine ausreichend hohe Drehzahl gebracht. In den Trägheiten des Rotors, der Getriebestufen und der Vorgelegewelle S wird kinetische Energie gespeichert.
- Die Elektromaschine 5 wird nun mit dem maximalen generatorischen Drehmoment abgebremst. Der Rotor der Elektromaschine 5 und damit auch die Vorgelegewelle S werden verzögert. Das verzögernde Drehmoment an der Vorgelegewelle S erzeugt mit der Übersetzung eines Planetengetriebes P2 ein Startmoment auf den Verbrennungsmotor, das zusätzlich zur elektrischen Energie zum Starten beiträgt.
- Der Strom der Elektromaschine 5 wird genutzt, um die weitere Elektromaschine 8 anzutreiben. Diese wirkt somit als Motor zum Beschleunigen des Verbrennungsmotors. Dabei wird vorteilhafterweise der maximal mögliche Batteriestrom zusätzlich genutzt.

Fig. 4 zeigt auch eine Kurbelwelle KW, eine Ausgangswelle AW und ein weiteres Planetengetriebe P1 sowie nicht näher bezeichnete Getriebeteile.

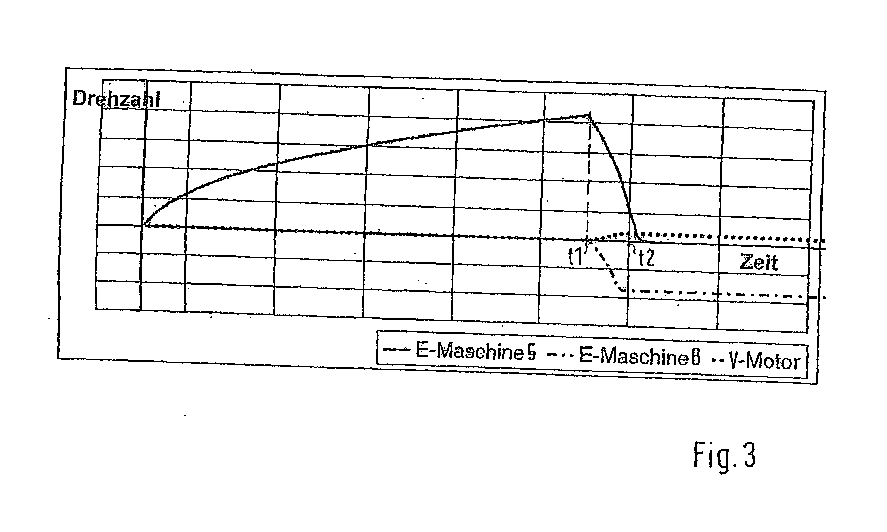

In Fig. 3 ist der Verlauf der Drehzahl der beiden Elektromaschinen 5, 8 und des Verbrennungsmotors über der Zeit dargestellt, wie es sich bei dem beschriebenen Startvorgang ergibt. Zunächst wird die Drehzahl der Elektromaschine 5 mittels der zur Verfügung stehenden Batterieleistung auf eine vorgegebene, z.B. die maximale Drehzahl gebracht und dann wird die Elektromaschine 5 in einem Zeitpunkt t1 in den Generatorbetrieb gesteuert. Der im Generatorbetrieb von der Elektromaschine 5 erzeugte Strom wird der weiteren Elektromaschine 8 zugeführt, mit dem der Verbrennungsmotor zum Starten angetrieben wird. Zu einem Zeitpunkt t2 ist der Verbrennungsmotor neu gestartet.

## Patentansprüche

1. Verfahren zum Starten eines Hybridantriebs, der eine Batterie (1), einen Verbrennungsmotor (9) und mindestens zwei Elektromaschinen (5, 8) aufweist, von denen mindestens eine (8) zum Starten des Verbrennungsmotors (9) ausgenutzt wird,
**dadurch gekennzeichnet,**
**dass** mit Beginn einer Startphase vor dem eigentlichen Starten des Verbrennungsmotors (9), die mindestens eine zum Starten des Verbrennungsmotors (9) ausgenutzte Elektromaschine (8) mit dem Verbrennungsmotor (9) verbunden ist, während mindestens eine andere der Elektromaschinen (5), und zwar nur diese, in einem von dem Verbrennungsmotor (9) entkoppelten Zustand im motorischen Betrieb unter Zuführung elektrischer Energie aus der Batterie (1) auf eine vorgegebene oder vorgebbare Drehzahl gebracht wird und anschließend zu einem Zeitpunkt (t1) in den Generatorbetrieb gesteuert wird und
**dass** die nach dem Erreichen dieser Drehzahl im Generatorbetrieb von der anderen Elektromaschine (5) erhaltene elektrische Energie der mindestenseinen zum Starten des Verbrennungsmotors (9) ausgenutzten Elektromaschine (8) der Elektromaschinen zugeführt wird, mit der dann der Verbrennungsmotor (9) gestartet wird.

2. Verfahren nach Anspruch 1,
**dadurch gekennzeichnet,**
**dass** bei der Startphase des Verbrennungsmotors (9) die von der mindestens einen anderen Elektromaschine (5) generierte Spannung konstant geregelt wird.

3. Verfahren nach Anspruch 1 oder 2,
**dadurch gekennzeichnet,**
**dass** die mindestens eine zum Starten ausgenutzte Elektromaschine (8) während der Startphase zusätzlich mit elektrischer Energie aus der Batterie (1) gespeist wird.

4. Verfahren nach einem der vorhergehenden Ansprüche,
**dadurch gekennzeichnet,**
**dass** zum Starten des Verbrennungsmotors (9) ein verzögerndes Drehmoment der mindestens einen anderen Elektromaschine (5) während des Generatorbetriebes mit ausgenutzt wird.

5. Verfahren nach einem der vorhergehenden Ansprüche,
**dadurch gekennzeichnet,**
**dass** die Drehzahl der mindestens einen anderen Elektromaschine (5) in Abhängigkeit eines erfassten Batteriezustandes vorgegeben wird.

## Claims

1. Method for starting a hybrid drive, which has a battery (1), an internal combustion engine (9) and at least two electrical machines (5, 8), at least one (8) of which is used for starting the internal combustion engine (9),
**characterized in that**
at the commencement of a starting phase before the actual starting of the internal combustion engine (9), the at least one electrical machine (8), which is used for starting the internal combustion engine (9) is connected to the internal combustion engine (9), while at least one other of the electrical machines (5), to be precise only this or these, is caused to rotate at a predetermined rotation speed, or at a rotation speed which can be predetermined, in the motor mode and in a state in which it is decoupled from the internal combustion engine (9), in order to supply electrical power from the battery (1) and is then switched to the generator mode at a time (t1), and **in that** the electrical energy (which is obtained after the other electrical machine (5) reaches this rotation speed in the generator mode) is supplied to the at least one electrical machine (8) of the electrical machines which is or are used for starting the internal combustion engine (9), and by means of which the internal combustion engine (9) is then started.

2. Method according to Claim 1,
**characterized**
**in that**, during the starting phase of the internal combustion engine (9), the voltage which is generated by the at least one other electrical machine (5) is regulated to be constant.

3. Method according to Claim 1 or 2,
**characterized**
**in that** the at least one electrical machine (8) which is used for starting is additionally fed during the starting phase with electrical energy from the battery (1).

4. Method according to one of the preceding claims,
**characterized**
**in that** a decelerating torque from the at least one other electrical machine (5) is also used, during the generator mode, for starting of the internal combustion engine (9).

5. Method according to one of the preceding claims,
**characterized**
**in that** the rotation speed of the at least one other electrical machine (5) is predetermined as a function of a detected battery state.

## Revendications

1. Procédé pour mettre en marche un entraînement hybride qui comprend une batterie (1), un moteur à combustion interne (9) et au moins deux machines électriques (5, 8) dont l'une au moins (8) est utilisée pour mettre en marche le moteur à combustion interne,
**caractérisé en ce qu'**
au début d'une phase de démarrage, avant le démarrage proprement dit du moteur (9), on relie à celui-ci la machine électrique (8) au nombre d'une au moins utilisée pour le faire démarrer tandis qu'au moins une autre machine électrique (5), et seulement cette machine, est amenée tout en étant découplée du moteur à combustion interne (9), par l'énergie électrique de la batterie (1) à fonctionner en moteur à une vitesse de rotation prédéterminée ou prédéterminable puis, à un instant (t1) est commandée de manière à fonctionner en générateur et une fois atteinte cette vitesse en générateur, l'énergie électrique fournie par cette machine électrique (5) est envoyée au moteur électrique (8) utilisé pour mettre en marche le moteur à combustion interne (9) de sorte que celui-ci démarre.

2. Procédé selon la revendication 1,
**caractérisé en ce que**
pendant la phase de démarrage du moteur à combustion interne (9) la tension générée par au moins l'autre machine (5) est régulée.

3. Procédé selon la revendication 1 ou 2,
**caractérisé en ce que**
la machine électrique (8), au nombre d'une au moins, utilisée pendant la phase de démarrage est alimentée en plus par de l'énergie électrique fournie par la batterie (1).

4. Procédé selon l'une des revendications précédentes,
**caractérisé en ce que**
pour démarrer le moteur à combustion interne (9), un couple de ralentissement de l'autre machine (5) au nombre d'une au moins, est utilisé également pendant le fonctionnement en générateur.

5. Procédé selon l'une des revendications précédentes,
**caractérisé en ce que**
la vitesse de rotation de la machine électrique (5) au nombre d'une au moins, est prédéfinie en fonction d'un état détecté de la batterie.
